# EUROPÄISCHE PATENTANMELDUNG

(11) **EP 0 582 740 A1**
(43) Veröffentlichungstag der Anmeldung: **16.02.1994**
(21) Anmeldenummer: 92113771.7
(22) Anmeldetag: 12.08.1992
(51) Int. Cl.: H04R 1/02, H02B 1/28

(54) **Verfahren zur Herstellung einer gasdurchlässigen metallischen Abdeckung eines Schlagwettergeschützten, druckfesten Gehäuses**

(71) Anmelder: MARCO SYSTEMANALYSE UND ENTWICKLUNG GmbH, D-85221 Dachau (DE)
(72) Erfinder: Reuter,Martin,c/o Marco Systemanalyse, W-8047 Karlsfeld (DE)
(74) Vertreter: Schaumburg, Thoenes & Thurn

(57) **Zusammenfassung**

Beschrieben wird ein Verfahren zur Herstellung einer gasdurchlässigen metallischen Abdeckung (16) eines zur Aufnahme elektrischer Betriebsmittel bestimmten druckfesten Gehäuses. In der Abdeckung (16) wird eine Vielzahl von Schlitzen (22) hergestellt, durch die das Gas dringen kann. Die Schlitze bewirken bei einer Explosion des Gases, daß die Flammenfront gelöscht wird und die Abdeckung ausreichend Festigkeit hat.

## Beschreibung

Die Erfindung betrifft die Herstellung einer gasdurchlässigen metallischen Abdeckung eines zur Aufnahme elektrischer Betriebsmittel bestimmten druckfesten Gehäuses sowie eine derartige Abdeckung.

In der Norm EN 50018 ist festgelegt, wie in einem elektrischen Betriebsmittel für explosionsgefährdete Bereiche nach der Zündschutzart "druckfeste Kapselung d" luftdurchlässige Spalte zünddurchschlagsicher zu gestalten sind.

So ist z.B. bei einem eingeschlossenen von Volumen von weniger als 100 cm³ bei einer Spaltlänge von mindestens 6 mm eine Spaltbreite von höchstens 0,3 mm zulässig. Solch enge Spalte oder Schlitze sind mit spanabhebenden Verfahren nur schwer herstellbar. Auch die Erzeugung der Schlitze in einer Abdeckung vorgegebener Abmessungen aus dem vollen Material mittels Laserbearbeitung ist aufgrund der großen Spaltlänge, die gleich der Materialdicke ist, bei der geforderten kleinen Spaltbreite nicht möglich.

Ein Beispiel für solche Geräte, bei denen eine druckfeste Kapselung der oben genannten Art erforderlich ist, sind Lautsprecher, die im Untertage-Kohlebergbau eingesetzt werden. Bei Lautsprechern wird die Membran in der Regel durch eine stromdurchflossene Ringspule in einem zylindrischen Magnetfeld angetrieben. Zur Erzielung eines hinreichenden Membranhubes sind große Windungszahlen und relativ hohe Stromspitzen erforderlich. Große Spuleninduktivität und hoher Spitzenstrom bedeuten, daß beim Einsatz solcher Lautsprecher in explosionsgefährdeter Umgebung die Zündschutzart "i" (eigensicher) nicht realisiert werden kann.

Es sind Lautsprecherausführungen bekannt, bei denen die druckfeste Kapselung dadurch realisiert wird, daß das innere Volumen mit der Membran und der Spule durch eine Scheibe aus Sintermetall gegen die Umgebung abgetrennt ist. Eine solche Scheibe verhindert das Durchschlagen einer eventuell im Inneren stattfindenden Explosion nach Außen. Das Material ist andererseits so porös, daß die von der bewegten Membran hinter der Scheibe erzeugten Schallwellen nicht wesentlich gedämpft werden. Die Verwendung solcher Sinterscheiben ist allerdings bisher noch nicht durch eine Europäische Norm geregelt. Daher ist eine allgemeine Typenzulassung von elektrischen Betriebsmitteln, bei denen solche Scheiben verwendet werden könnten, durch Europäische Prüfbehörden derzeit nicht möglich.

Der Erfindung liegt die Aufgabe zugrunde, ein Verfahren der eingangs genannten Art anzugeben, das die wirtschaftliche Herstellung gasdurchlässiger metallischer Abdeckungen der eingangs genannten Art zuläßt, welche der derzeit gültigen Norm EN 50018 genügen.

Zur Lösung dieser Aufgabe wird erfindungsgemäß vorgeschlagen, daß in der Abdeckung eine Vielzahl von Schlitzen hergestellt wird.

Die Schlitze bewirken einerseits, daß beim Durchschlagen eines explodierenden Gasgemisches die entstehende Wärme der Flammen an der Oberfläche der Schlitze schnell und wirkungsvoll abgeleitet wird und die Flammenfront somit erlischt. Andererseits hat die Abdeckung noch ausreichende Festigkeit, um einem großen Druck zu widerstehen. Außerdem hat die Abdeckung eine hohe Gasdurchlässigkeit, so daß die Erfindung effizient einsetzbar ist, beispielsweise bei einem Lautsprechersystem.

Bei einem bevorzugten Ausführungsbeispiel werden die Schlitze durch Drahterosion, vorzugsweise durch Bearbeitung aus dem vollen Material hergestellt.

Das Drahterosionsverfahren erlaubt auch bei relativ dikken Abdeckungen aus Metall, beispielsweise Edelstahl die Herstellung einer Vielzahl von Schlitzen mit gleichbleibender Breite von maximal 0,3 mm. Dadurch lassen sich Abdeckungen herstellen, die einerseits den Forderungen nach großer Löschstrecke und Druckfestigkeit genügen, und die andererseits hinreichend gasdurchlässig sind, um beispielsweise bei der Verwendung als Abdeckung eines Lautsprechergehäuses die Schallwellen nicht wesentlich zu dämpfen.

Vorzugsweise werden die Schlitze ausgehend von einem Rand der Abdeckung erzeugt. Damit wird vermieden, daß pro Schlitz eine Bohrung in dem Material erzeugt werden muß, durch die der Erosionsdraht hindurchgefädelt wird. Wenn jedoch die Außenkontur der Abdeckung unversehrt bleiben soll, um beispielsweise die Abdeckung sicher und dicht mit dem restlichen Gehäuse verbinden zu können, kann man auch so vorgehen, daß die Abdeckung zunächst unterteilt wird und daß die Schlitze ausgehend von den zur Anlage aneinander bestimmten Rändern der Abdeckungsteile erzeugt werden. Die Teile können gegebenenfalls anschließend wieder fest miteinander verbunden werden.

Vorzugsweise sind die Schlitze in einer so erzeugten metallischen Abdeckung parallel zueinander gerichtet, wobei die Abdeckung oder ihre Teile eine kammartige Form erhalten. Die Abdeckung kann aus Edelstahl bestehen.

Bei einer anderen Ausgestaltung der Erfindung ist die Abdeckung aus einer Vielzahl von Lagen zusammengefügt. Vorteilhafterweise werden die Schlitze einer jeden Lage durch Stanzen oder Laserschneiden hergestellt. Beim Zusammenfügen der Lagen zur Abdeckung werden diese Lagen beispielsweise durch Punktschweißen verbunden. Eine andere Möglichkeit besteht darin, die Lagen übereinanderzulegen und sie an den Rändern mit einem Draht zu verschweißen. Die einzelnen Lagen mit den Schlitzen können aus einem Blech in einem einzigen Stanzvorgang erzeugt werden.

Die folgende Beschreibung erläutert in Verbindung mit den beigefügten Zeichnungen die Erfindung anhand eines Ausführungsbeispieles. Es Zeigen:
- Figur 1: eine schematische Schnittdarstellung eines Lautsprechers mit einem druckfesten Gehäuse, wobei das Gehäuse im Bereich der Lautsprechermembran durch eine erfindungsgemäße Abdeckung verschlossen ist,
- Figur 2: eine Draufsicht auf die Abdeckung und
- Figuren 3 und 4: vergrößerte Draufsichten auf Teile der in Figur 2 dargestellten Abdeckung.

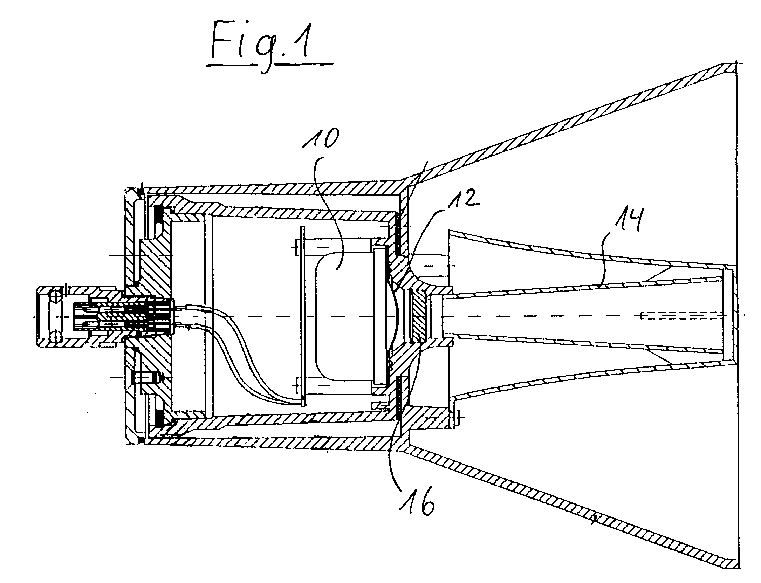

Figur 1 zeigt eine Lautsprecheranordnung mit einem an sich bekannten druckfesten Lautsprechergehäuse. Die Lautsprecheranordnung braucht daher nicht näher erläutert zu werden. Sie umfaßt einen Membranantrieb 10 mit einer Membran 12. Die von der Membran 12 erzeugten Schallwellen werden in einen Schalltrichter 14 abgestrahlt. Dieser ist durch eine erfindungsgemäße druckfeste Abdeckscheibe 16 abgeschlossen.

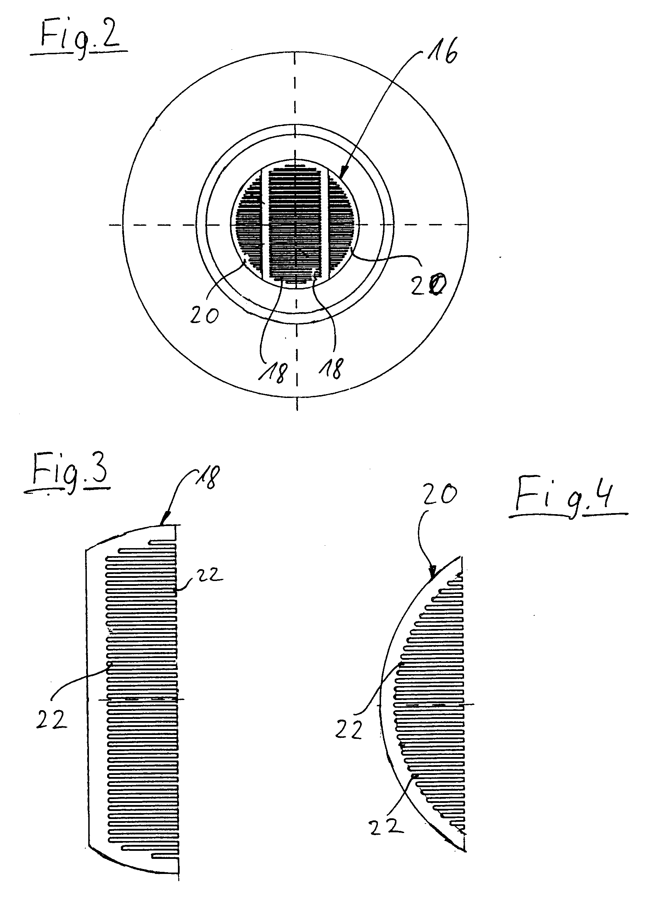

Gemäß den Figuren 2 bis 4 besteht die Abdeckscheibe aus zwei Mittelabschnitten 18 gemäß Figur 3 und zwei Randabschnitten 20 gemäß Figur 4, die sich zusammengesetzt zu der Kreisscheibe gemäß Figur 2 ergänzen. Ausgehend von den Rändern, an denen die Teile 18 und 20 aneinandergrenzen sind in den Teilen 18 und 20 parallele Schlitze 22 durch Drahterosion hergestellt, so daß die Teile 18 und 20 jeweils eine kammförmige Struktur erhalten. Nach dem Erzeugen der Schlitze 22 können die Teile wieder miteinander verbunden werden, wenn dies erforderlich sein sollte. Die resultierende Scheibe ist einerseits druckfest und durchschlagsicher andererseits ausreichend luftdurchlässig, um sicherzustellen, daß die von der Membran 12 erzeugten Schallwellen nicht wesentlich gedämpft werden.

## Patentansprüche

1. Verfahren zur Herstellung einer gasdurchlässigen metallischen Abdeckung eines zur Aufnahme elektrischer Betriebsmittel bestimmten druckfesten Gehäuses, dadurch **gekennzeichnet**, daß in der Abdeckung (16) eine Vielzahl von Schlitzen (22) hergestellt wird.

2. Verfahren nach Anspruch 1, dadurch **gekennzeichnet**, daß die Schlitze (22) durch Drahterosion hergestellt werden.

3. Verfahren nach Anspruch 1 oder 2, dadurch **gekennzeichnet**, daß die Abdeckung (16) aus einer Vielzahl von Lagen zusammengefügt wird.

4. Verfahren nach Anspruch 3, dadurch **gekennzeichnet**, daß in jeder Lage Schlitze (22) durch Stanzen oder Laserschneiden hergestellt werden.

5. Verfahren nach Anspruch 3 oder 4, dadurch **gekennzeichnet**, daß das Zusammenfügen der Vielzahl der Lagen durch Punktschweißen oder durch Verbinden der Ränder der Lagen mittels eines Drahtes erfolgt, der mit den Lagen verschweißt wird.

6. Verfahren nach einem der vorhergehenden Ansprüche, dadurch **gekennzeichnet**, daß die Schlitze (22) ausgehend von einem Rand der Abdeckung (16) erzeugt werden.

7. Verfahren nach Anspruch 1 oder 2, dadurch **gekennzeichnet**, daß die Abdeckung (16) unterteilt wird und daß die Schlitze (22) ausgehend von den zur Anlage aneinander bestimmten Rändern der Abdeckungsteile (18, 20) erzeugt werden.

8. Verfahren nach Anspruch 7, dadurch **gekennzeichnet**, daß die Abdeckungsteile (18, 20) nach dem Erzeugen der Schlitze (22) wieder miteinander verbunden werden.

9. Gasdurchlässige metallische Abdeckung (16) eines zur Aufnahme elektrischer Betriebsmitteln bestimmten druckfesten Gehäuses, dadurch **gekennzeichnet**, daß sie eine Vielzahl von Schlitzen (22) hat, deren Breite maximal 0,3 mm beträgt.

10. Abdeckung nach Anspruch 9, dadurch **gekennzeichnet**, daß die Schlitze (22) parallel zueinander sind.

11. Abdeckung nach Anspruch 10 oder 11, dadurch **gekennzeichnet**, daß die Schlitze (22) von einem Rand der Abdeckung ausgehen.

12. Abdeckung nach Anspruch 10 oder 11, dadurch **gekennzeichnet**, daß die Abdeckung (16) mindestens zwei Teile (18, 20) umfaßt und daß die Schlitze (22) jeweils von den zur Anlage aneinander bestimmten Rändern der Teile (18, 20) ausgehen.

13. Abdeckung nach einem der Ansprüche 10 bis 12, dadurch **gekennzeichnet**, daß sie aus Edelstahl hergestellt ist.

14. Abdeckung nach einem der Ansprüche 10 bis 13, dadurch **gekennzeichnet**, daß sie aus mehreren Lagen mit Schlitzen hergestellt ist.

15. Abdeckung nach einem der Ansprüche 5 bis 9, dadurch **gekennzeichnet**, daß sie zum Abdecken des Membranantriebes (10, 12) eines gekapselten Lautsprechers ausgebildet ist.
